(19) Europäisches Patentamt
European Patent Office
Office européen des brevets

(11) Publication number: 0 225 067 B1

# EUROPEAN PATENT SPECIFICATION

(45) Date of publication of patent specification :
13.02.91 Bulletin 91/07

(51) Int. Cl.⁵ : C08F 255/02, B32B 27/00

(21) Application number : 86308634.4

(22) Date of filing : 05.11.86

(54) Chemically modified ethylene copolymer.

(30) Priority : 21.11.85 FI 854607

(43) Date of publication of application :
10.06.87 Bulletin 87/24

(45) Publication of the grant of the patent :
13.02.91 Bulletin 91/07

(84) Designated Contracting States :
AT BE CH DE FR GB IT LI LU NL SE

(56) References cited :
EP-A- 224 349
GB-A- 1 230 310
US-A- 4 389 438
CHEMICAL ABSTRACTS, vol. 92, no. 24, June 1980, page 37, abstract no. 199279a, Columbus, Ohio, US

(73) Proprietor : NESTE OY
Keilaniemi
SF-02150 Espoo 15 (FI)

(72) Inventor : Bergstrom, Christer
Pietarinkatu 10 C 19
FI-00140 Helsinki (FI)
Inventor : Bjorkvall, Barbro
Stenbockens vag 5 F
FI-00740 Helsinki (FI)
Inventor : Stenlund, Bengt
Peltolavagen 6 B 61
FI-20720 Turku (FI)
Inventor : Johansson, Carl-Johan
Wadenstrominkuja 32
FI-06100 Porvoo (FI)

(74) Representative : Ruffles, Graham Keith et al
MARKS & CLERK 57-60 Lincoln's Inn Fields
London WC2A 3LS (GB)

## Description

The present invention concerns a chemically modified ethylene copolymer which has good adhesion to metals and to other polar substances.

Polyethylene and polyolefins in general are characterized by poor adhesion to metals and to materials containing polar groups. Somewhat better adhesion is achieved in some instances by copolymerizing unsaturated esters, such as vinyl acetate or alkyl- (meth) acrylate, (methylacrylate, ethylacrylate, butylacrylate, etc.), but even these copolymers display insufficient adhesion in most multi-ply structures. Many ways to improve this adhesion have been tried. For instance, unsaturated acids or acid anhydrides have been used as comonomer, particularly in the polymerizing of copolymers or terpolymers. Examples of commercial applications are : ethylene/acrylic acid copolymer containing 9% acrylic acid, and ethylene/methacrylic acid copolymer containing 9% methacrylic acid. One known commercial terpolymer contains 4% acrylic acid and 7% butylacrylate. Also commercially available is a product in which the methacrylic acid is partially neutralized to a salt so that a so-called ionomer has been obtained. An example of the use of maleic acid anhydride for better adhesion is presented by an application in which maleic acid anhydride has been grafted to LDPE, HDPE or EVA. Another example is the terpolymer of ethylene, butylacrylate and maleic acid anhydride.

Direct copolymerizing of ethylene with an unsaturated acid is disadvantageous for a number of reasons. The acids are corrosive and curtail the life span of the apparatus, both in the synthesis step and in the working step. Moreover, these ethylene/acid copolymers or terpolymers are thermally unstable and one is therefore compelled to employ low working temperatures, implying restrictions of prtoduction rate and product quality. Large acid quantities are indispensable for reaching satisfactory adhesion because these copolymerized acids are immobile and it is therefore difficult for them to force themselves out from the polymer matrix and to reach the polar groups present in the other boundary layer. Large acid quantities are also required in order to lower the crystallinity, this being indispensable if adhesion is to be achieved. Of course, this can also be achieved by using a third monomer, such as butylacrylate or vinyl acetate, for instance. Howerver, terpolymers are uneconomical as regards recovery of the copolymers in the synthesis and, as a result, the content of the comonomer which is active regarding adhesion is limited. The total content of the comonomer is also limited in view of foodstuff compatibility, in the legislation of various countries. High vinyl acetate quantities also introduce corrosion problems. The crystallinity many also be lowered by admixing a thermoplastic elastomer, such as polyisobutylene (PIB), for instance. For instance when grafting maleic acid anhydride one has endeavoured to improve its mobility by using spacer groups between maleic acid anhydride and polymer (Diels-Alder reaction between diene and maleic acid anhydride and grafting thereof with the polymer). Chemical Abstract No. 199279a in Vol 92 (1980) discloses graft coplymerisation of any ethylene-ethyl acrylate copolymer with a relatively large amount (5% by weight) acrylic acid.

The object of the invention is to achieve an improvement of presently known modified ethylene copolymers.

The chemically modified ethylene copolymer of the invention is any ethylene/butyl acylate (EBA) copolymer to which has been grafted unsaturated acid or anhydride, the acid being acrylic acid, methacrylic acid, fumaric acid or maleic acid ar an anhydride therof and being grafted in an amount of 0.1-1% by weight, based on the weight of EBA. When EBA (ethylene/butylacrylate) is grafted with an unsaturated acid as taught by the invention, the situation is considerably more favourable than in the instances mentioned above. EBA is considerably less corrosive than EVA. In addition, grafting is mainly to the butylacrylate groups, not to the ethylene groups, and in this way one obtains large-volume groups which are active regarding adhesion and which can easily force themselves out from the polymer matrix, to the other boundary surface. By using copolymerised butylacrylate as a spacer group in this way, one obtains a morphology so favourable that satisfactory adhesion is effected with acid contents which are considerably less than 1%. This low acid content is highly advantageous in view of the costs associated with raw material, apparatus (minimal corrosion) and production techniques (the concentrate may be diluted with unmodified copolymer). Thermal stability during extrusion will now also be better, and it becomes possible to use lower total comonomer contents and, thus, to meet various foodstuff compatibility requirements imposed on various applications. When EBA (ethylene/butylacrylate) is grafted with an unsaturated acid, one starts with the above-mentioned copolymer, with 0.1-1% of unsaturated acid and with 0.01-0.5% radical former, and these are mixed at a temperature at which the mixture is in molten state and the radical former is decomposed and produces those radicals which effect the grafting. Mixing may take place as a batch process, or continuously, and the components may be added all at once or separately, or in pairs. It is to greatest advantage if the mixture is first melt-homogenised at a lower temperature and thereafter the temperature is raised to a level at which the radical former produces radicals. Grafting may also be accomplished in a way other than has just been described.

The acids, or anhydride, in the grafting process are acrylic acid, methacrylic acid, maleic acid, fumaric acid or maleic acid anhydride. For radical former, one may use organic peroxides, per-esters, per-carbonates or radical formers of another type. Usually the following are used : dicumyl peroxide, cumyl tert. butylperoxide, or di-tert. butylperoxide. The formulation may moreover contain chain shift agents, antioxidants or other additives typical with polyolefins.

EBA (ethylene/butylacrylate) copolymers grafted with unsaturated acid in the manner described may be used as so-called adhesion polymers in the manufacturing of multi-ply products which contain one or several polyolefin courses and one or several courses of polar plastic (such as polyamide, EVOH) or of metal (such as aluminium, steel, copper). Such multiply products may be produced by coextrusion, by (co)extrusioon coating or by (co)extrusion lamination, and the objects may be films, sheets, tubes, cables, bottles, etc. It is also possible to use such adhesion plastic as adhesion layer in powder coating steel tubes. In so-called plastic alloys, which are composed of unmiscible (e.g. polar and non-polar) plastics, these adhesion plastics may likewise be used as so-called emulsifier polymers in order to achieve adhesion between the two phases and, thereby, better technological properties. The adhesion to other polar materials (e.g. glass, minerals, wood) may also be improved in this way.

The invention is now more closely described with the aid of the non-restrictive examples following below.

## Example 1

In a Brabender extruder ($\varnothing$=19 mm, L=20 D, and compression ratio 3 :1) were extruded mixtures of LDPE (MI=4, =0.922) and EBA (MI=4, BA 17%), in different proportions, together with 0.05% ditertiary butylperoxide and 1% unsaturated acid (acrylic acid, AA ; maleic acid anhydride). The temperature in the extrusion press was 105°C, 200°C and 250°C and in the nozzle, 250°C. The nozzle was of coextrusion type, and for the other course was extruded PA-6 (BASF Ultramid®B4), at 250°C. The speed of rotation of the screw was 41 min$^{-1}$. In this way two-ply strips (acid-grafted polymer and PA-6) were extruded, which wre tested for adhesion after 24 hrs and after two weeks. This test was done with the Instron pulling tester (Peel Test), the pulling rate being 50 mm/min. The force was measured after equilibrium had been reached, and it was expressed in units N/cm.

Table I reveals how the content of butylacrylate (BA) influences the adhesion.

### Table I

| Polymer Adhesion | (N/cm) | | | |
|---|---|---|---|---|
| % BA | 1% AA 1 day | 1% AA 2 weeks | 1% MAN 1 day | 1% MAN 2 weeks |
| 0 | 5,8 | 5,6 | 3,5 | 5,6 |
| 5 | 6,4 | 7,0 | 6,6 | 11,7 |
| 10 | 12,8 | 12,1 | 9,7 | 16,1 |
| 13 | 23,0 | 23,4 | 19,8 | 55,5 |
| 17 | 37,3 | 38,0 | 40,2 | 60,0 |

It is seen from these results that a substantial improvement in adhesion to PA-6 takes place when the butylacrylate content of the acid-grafted polymer is increased. This concerns both acrylic acid and maleic acid anhydride. It may further be noted that the adhesion improves substantially as a function of time when maleic acid arhydride is used. It may be mentioned for comparison that the adhesion of non-grafted 17%

3

EBA is 0.5 N/cm, and 0.2 N/cm is obtained when using non-grafted polyethylene.

Example 2

The test was performed in this case as in Example 1, except that EBA (MI=4, BA=17%) only was used for basic polymer when the acid content was varied. Table II reveals the influence of acid content (AA, MA) on adhesion.

## Table II

| Acid content % | | Adhesion (N/cm) | | | |
|---|---|---|---|---|---|
| | AA | AA | MA | MA | |
| | 1 day | 2 weeks | 1 day | 2 weeks | |
| 0,3 | 9,6 | 9,2 | 35,0 | 37,6 | |
| 0,5 | 46,3 | 47,1 | 35,0 | 38,2 | |
| 0,7 | 36,0 | 36,2 | 40,0 | 43,4 | |
| 1,0 | 37,3 | 38,0 | 40,2 | 60,0 | |
| * 1,5 | 44,1 | 45,2 | 41,6 | 63,0 | |

* not within the scope of the present invention

It is seen from these results that if the butylacrylate content is as high as 17%, one can manmage with very low acid concentrations (< 1%).

Example 3

In this case the testing was done as in Examples 1 and 2, except that with one formulation (MI=4, BA=17% ; 0.7% AA ; 0.05% ditertiary butylperoxide) comparisons were instituted concerning adhesion to different materials (Polyamid-6, BASF Ultramid®B4 ; ethylene/vinylalcohol, EVAL-F ; Aluminium ; Steel). For metal coating a nozzle was constructed through which the metal strip (20 mm × 1.0 mm) could be pushed.

Table III reveals the way in which acrylic acid-grafted EBA and non-acid grafted EBA adhere to different materials.

## Table III

| Polymer | Adhesion (N/cm) | | | |
|---|---|---|---|---|
| | PA-6 | EVOH | Al | Fe |
| AA-grafted EBA | 45,0 | 6,2 | 52,0 | 83,0 |
| EBA | 0,5 | 3,0 | 10,5 | 9,8 |

It is seen from these results that 17% EBA has fair adhesion to aluminium and steel but the adhesion increases significantly when EBA is grafted with a small quantity of acrylic acid. Also in the case of EVOH a small adhesion is obtained, which increases significantly on grafting with acrylic acid.

## Example 4

In this case the testing was done as in Example 3, except that comparisons were instituted with commercial adhesion polymers.

Table IV shows the way in which acrylic acid-grafted EBA adheres to different materials, compared with commercial adhesion polymers.

### Table IV

| Polymer | Adhesion (N/cm) | | | |
|---|---|---|---|---|
| | PA-6 | EVOH | Al | Fe |
| AA-grafted EBA 0.7% AA | 45,0 | 6,2 | 52,0 | 83,0 |
| Primacor® 1420 9% AA | 55,0 | 2,6 | 10,3 | 8,3 |
| Nucrel® 0903 9% MAA | 23,3 | 1,3 | 7,0 | 3,4 |
| Surlyn® 1650 12% MAA + Zn | 71,3 | 0 | 5,5 | 8,1 |
| CXA 3095 | 7,0 | 3,4 | 7,1 | 9,5 |
| Lupolen® A2910M 4% AA + 7% BA | 35,6 | 3,4 | 6,4 | 7,5 |

It can be seen from these results that 17% EBA to which 0.7% acrylic acid have been grafted has altogether superior adhesion to metals, such as aluminium and steel. The adhesion to polyamide-6 and to EVOH is also competitive.

In the following are stated the claims, details being understood to be variable within the scope of the inventive idea defined by them.

## Claims

1. A chemically modified ethylene copolymer having good adhesion to metals and other polar substances, characterised in that it consists of ethylene/butylacrylate (EBA) to which has been grafted an unsaturated acid selected from the group of acrylic acid, methacrylic acid, fumaric acid, maleic acid, and maleic acid anhydride, and that the unsaturated acid has been grafted in an amount of 0.1-1% of the weight of the ethylene copolymer.

2. A film, sheet, tube, cable, bottle or other composite product comprising at least one layer of an ethylene copolymer according to Claim 1, at least one layer of metal, polar plastics or other polar material, and optionally at least one layer of an unmodified polyolefin.

3. A composite product according to Claim 2, characterised in that it is a film.

4. A composite product according to Claim 2, characterised in that there is at least one metal layer of steel, aluminium or copper and at least on epolar plastics layer of polyamide, polyester or EVOH.

## Ansprüche

1. Chemisch modifiziertes Ethylen-Copolymer mit guter Bindefähigkeit in Bezug auf Metall und andere polare Substanzen, dadurch gekennzeichnet, dass es aus Ethylen/Butylacrylat (EBA) besteht, das mit einer nicht gesättigten Säure aus der Gruppe geimpft ist, die Acrylsäure, Methacrylsäure, Fumarsäure, Maleinsäure und Maleinsäure-Anhydrid umfasst, und dass die ungesättigte Säure mit einer Menge von 0.1 bis 1 Gew.-% des Ethylencopolymers geimpft ist.

2. Folie, Blatt, Rohr, Kabel, Flasche oder ein anderes zusammengesetztes Produkt, das mindestens eine Schicht aus einem Ethylen-Copolymer nach Anspruch 1, mindestens eine Metallschicht, polare Kunststoffe oder ein anderes, polares Material und als Option mindestens eine Schicht aus einem nicht modifizierten Polyolefin enthält.

3. Zusammengesetztes Produkt nach Anspruch 2, dadurch gekennzeichnet, dass es eine Folie ist.

4. Zusammengesetztes Produkt nach Anspruch 2, dadurch gekennzeichnet, dass es mindestens eine Metallschicht aus Stahl, Aluminium oder Kupfer und mindestens eine epolare Kunststoffschicht aus Polyamid, Polyester oder EVOH aufweist.

## Revendications

1. Un copolymère d'éthylène modifié chimiquement ayant une bonne adhésion aux métaux et aux autres substances polaires, caractérisé en ce qu'il consiste en un éthylène/acrylate de butyle (EBA) auquel on a greffé un acide insaturé choisi dans le groupe constitué par l'acide acrylique, l'acide méthacrylique, l'acide fumarique, l'acide maléique et l'anhydride de l'acide maléique, et en ce que l'acide insaturé est greffé en une proportion de 0,1 à 1% relativement au poids du copolymère d'éthylène.

2. Un film, une feuille, un tube, un câble, une bouteille ou un autre produit composite comprenant au moins une couche d'un copolymère d'éthylène selon la revendication 1, au moins une couche de métal, de matières plastiques polaires ou d'une autre matière polaire et facultativement au moins une couche d'une polyoléfine non modifiée.

3. Un produit composite selon la revendication 2, caractérisé en ce qu'il est un film.

4. Un produit composite selon la revendication 2, caractérisé en ce qu'il comporte au moins une couche métallique d'acier, d'aluminium ou de cuivre et au moins une couche de plastique polaire, de polyamide, de polyester ou d'EVOH.